# EUROPÄISCHE PATENTSCHRIFT

(11) **EP 4 249 860 B1**
(45) Veröffentlichungstag und Bekanntmachung des Hinweises auf die Patenterteilung: **17.09.2025**
(21) Anmeldenummer: 23163925.3
(22) Anmeldetag: 24.03.2023
(51) Int. Cl.: G01F 15/00, B67C 3/28, G01F 25/00, G01F 15/075, G05D 7/00, G01F 13/00

(54) **VERFAHREN ZUM BETREIBEN EINER ABFÜLLVORRICHTUNG UND ENTSPRECHENDE ABFÜLLVORRICHTUNG**
METHOD FOR OPERATING A FILLING DEVICE AND CORRESPONDING FILLING DEVICE
PROCÉDÉ DE FONCTIONNEMENT D'UN DISPOSITIF DE REMPLISSAGE ET DISPOSITIF DE REMPLISSAGE CORRESPONDANT

(30) Priorität: 25.03.2022 DE 102022107097
(43) Veröffentlichungstag der Anmeldung: 27.09.2023
(73) Patentinhaber: Krohne Messtechnik GmbH, 47058 Duisburg (DE)
(72) Erfinder: Kuschnerus, Dirk, 47802 Krefeld (DE); Lüke, Christopher, 45892 Gelsenkirchen (DE); Walbrecker, Sven, 27639 Wurster Nordseeküste (DE)
(74) Vertreter: Gesthuysen Patentanwälte

(56) Entgegenhaltungen:
- EP-A1- 2 801 875
- EP-A1- 4 009 009
- EP-A1- 4 071 104
- DE-A1- 102005 008 041
- DE-A1- 19 612 797
- US-A1- 2006 146 689

## Beschreibung

Die Erfindung betrifft ein Verfahren zum Betreiben einer Abfüllvorrichtung, mit einem Abfüllventil zur Steuerung eines Mediumstroms, mit einem zeitdiskret abtastenden Durchflusssensor zur messtechnischen Erfassung des von dem Abfüllventil freigegebenen Mediumstroms und mit einer Steuereinheit zur Ansteuerung des Abfüllventils, wobei die Steuereinheit das Abfüllventil zur Durchführung eines Abfüllvorgangs mit einer definierten Soll-Abfüllmenge ansteuert unter Berücksichtigung der Ist-Abfüllmenge, die mithilfe der von dem Durchflusssensor erfassten Durchflussmesswerte ermittelt wird. Die Erfindung betrifft ferner eine ebensolche Abfüllvorrichtung.

Abfüllvorrichtungen der vorgenannten Art sind in der Prozesstechnik weit verbreitet, beispielsweise in der chemischen Industrie, vor allem aber auch in der Lebensmittel- und Getränkeindustrie. Die Schrift DE 10 2005 008041 A1 beschreibt eine derartige Vorrichtung zum dosierten Abfüllen eines fließfähigen Mediums in Gefäße. Als Durchflusssensor kommen Geräte zum Einsatz, die auf ganz unterschiedlichen Messprinzipien beruhen, häufig werden magnetisch-induktive Durchflussmessgeräte verwendet, die den Vorteil haben, dass keine mechanisch bewegten Teile zur Durchführung einer Messung benötigt werden, anders als beispielsweise bei Vortex-Durchflussmessgeräten oder Coriolis-Massedurchflussmessgeräten. Industriell genutzte prozesstechnische Abfüllanlagen weisen oft eine Vielzahl der zuvor beschriebenen Abfüllvorrichtungen auf, die auch als Abfüllstationen innerhalb einer Abfüllanlage bezeichnet werden könnten.

Unabhängig vom Messprinzip realisieren die Durchflusssensoren typischerweise ein Abtastsystem, das zu diskreten Zeitpunkten einen Messwert erfasst und ausgibt und nicht zeitkontinuierlich - etwa durch ein analoges Signal - einen Messwert ununterbrochen angibt. Dies liegt häufig schon allein an der digitalen Signalverarbeitung innerhalb des Durchflusssensors, im Rahmen derer eine Analog/Digital-Wandlung der (aufbereiteten) Rohmesssignale vorgenommen wird, wodurch es automatisch zu einer Abtastung kommt.

Die eingangs beschriebene Abfüllvorrichtung umfasst ein Abfüllventil, einen Durchflusssensor und eine Steuereinheit. Das Abfüllventil kann technisch in verschiedener Weise realisiert sein, es kann ein Ventil mit einem einzigen ansteuerbaren Stellelement sein, es kann aber auch mehrere steuerbare Komponenten umfassen, beispielsweise eine Kombination aus Schaltventil und Regelventil. Die Steuereinheit steuert das Abfüllventil an, wobei diese Ansteuerung tatsächlich meist auf einer Regelung basiert. Die Regelgröße, also die Abfüllmenge, wird erfasst, indem die abgetasteten Durchflussmesswerte während eines Abfüllvorgangs fortwährend integriert werden, sodass zu jedem Zeitpunkt die Abfüllmenge, also die gemessene Ist-Abfüllmenge, bekannt ist, und - wie für einen Regelungsvorgang typisch - mit der vorgegebenen Soll-Abfüllmenge verglichen wird. In Abhängigkeit von der Regeldifferenz wird dann das Abfüllventil angesteuert, also beispielsweise indem der Öffnungsgrad des Abfüllventils eingestellt wird.

Abgesehen davon, dass eine möglichst genaue Dosierung eines Mediums im Rahmen eines Abfüllvorgangs immer wünschenswert ist, kommt der Genauigkeit eines Abfüllvorgangs eine erhöhte Bedeutung zu bei der Abfüllung in Behältnisse, die zur Weitergabe an Endverbraucher gedacht sind (Flaschen, Kanister, Dosen). Hier muss eine Mindestmenge, meist die auf dem Behältnis angegebene Menge, garantiert enthalten sein, sodass Toleranzen in der Abfüllung stets zulasten des Herstellers gehen, es wird also stets mit einer Überfüllung gearbeitet. Daraus ergeben sich teilweise auch technische Probleme, beispielsweise wenn abgefüllte Medien aus dem Behältnis, in das sie abgefüllt werden, heraustreten und das Behältnis von außen verunreinigen, was insbesondere bei aufschäumenden Medien passieren kann.

Aufgabe der vorliegenden Erfindung ist es, das Verfahren zum Betreiben der Abfüllvorrichtung und eine entsprechende Abfüllvorrichtung so auszugestalten und weiterzubilden, dass der Abfüllvorgang mit einer erhöhten Genauigkeit durchgeführt werden kann.

Die zuvor hergeleitete und aufgezeigte Aufgabe wird bei dem Verfahren zum Betreiben einer Abfüllvorrichtung dadurch gelöst, dass der Beginn des Abfüllvorgangs synchronisiert zwischen Abfüllventil und Durchflusssensor erfolgt, sodass der erste abgetastete Durchflussmesswert des Durchflusssensors in einem definierten zeitlichen Zusammenhang steht zu der initialen Öffnung des Abfüllventils bei dem Abfüllvorgang.

Die der Erfindung zugrunde liegende Erkenntnis besteht darin, dass der Fehler bei der Durchflussmessung bzw. bei der auf den Messwerten der Durchflussmessung beruhenden Ermittlung der Ist-Abfüllmenge einer Schwankung unterliegt, die davon abhängt, wie - zeitlich verstanden - weit der erste abgetastete Durchflussmesswert entfernt ist von dem tatsächlich vorhandenen Durchfluss. Aufgrund der Abtastung kann es sein, dass der Durchflusssensor für die maximale Zeit einer Abtasten-Periodendauer "blind" ist. Wenn der Mediumstrom im ungünstigsten Fall genau dann einsetzt, nachdem ein Abtastzeitpunkt gerade vergangen ist, bleibt der Mediumstrom für die Zeitdauer einer Abtastperiode unerkannt und damit unberücksichtigt. Der Fehler wird kleiner, je näher der nächstgelegene Abtastzeitpunkt an den Zeitpunkt des einsetzenden Mediumstroms heranrückt. Durch die erfindungsgemäße Ausgestaltung des Verfahrens wird ein definierter zeitlicher Zusammenhang zwischen der initialen Öffnung des Abfüllventils - und damit dem Einsetzen des Mediumstroms - und der Auslösung der Erfassung des ersten abgetasteten Durchflussmesswerts hergestellt. In diesem Sinne ist also "synchronisiert" zu verstehen, wenn es heißt, dass der Beginn des Abfüllvorgangs synchronisiert zwischen Abfüllventil und Durchflusssensor erfolgt: Damit ist also nicht exakt zeitgleich gemeint, sondern in einer geeigneten zeitlichen Abhängigkeit zueinander. Im Ergebnis kann jedenfalls die Streuung des Messfehlers unterdrückt werden, ferner kann auch die Höhe des Messfehlers verkleinert und sogar minimiert werden.

Bei einer Weiterentwicklung des Verfahrens ist vorgesehen, dass der erste abgetastete Durchflussmesswert des Durchflusssensors zeitlich so zu der initialen Öffnung des Abfüllventils liegt, dass der Durchflussmesswert möglichst zeitnahe zu der initialen Öffnung des Abfüllventils erfasst wird. Auch diese Herangehensweise bewirkt, dass die durch die Abtastung des Durchflussmesswertes verursachte Streuung des Durchflussmesswertes beseitigt oder zumindest stark verkleinert wird. Die Maßnahme lässt sich verhältnismäßig einfach umsetzen.

Auf die Minimierung des Messfehlers zielt eine bevorzugte Ausgestaltung des Verfahrens ab, die sich dadurch auszeichnet, dass der erste abgetastete Durchflussmesswert des Durchflusssensors zeitlich so zu der initialen Öffnung des Abfüllventils ausgeführt wird, dass der Durchflussmesswert möglichst nahe an der unteren Messbereichsgrenze des Durchflusssensors erfasst wird. Damit wird der Zeitraum minimiert, in dem der Durchflusssensor aufgrund der zeitlichen Diskretisierung der Messung keinen Durchflussmesswert aufnimmt, in dem der Durchflusssensor - wie oben beschrieben - "blind" ist.

Bei einer Weiterentwicklung des vorgenannten Verfahrens ist vorgesehen, dass der erste abgetastete Durchflussmesswert definiert zeitverzögert zu der initialen Öffnung des Abfüllventils ermittelt wird, insbesondere unter Berücksichtigung einer systembedingten Totzeit zwischen einer Änderung der Ansteuerung des Abfüllventils und einer Änderung des Mediumstroms am Ort der Durchflussmessung durch den Durchflusssensor. Dies könnte beispielsweise der Fall sein, wenn, in Durchströmungsrichtung des Mediums gesehen, das Abfüllventil vor dem Durchflusssensor angeordnet ist.

Die zuvor hergeleitete Aufgabe wird auch gelöst bei einer Abfüllvorrichtung mit einem Abfüllventil zur Steuerung eines Mediumstroms, mit einem zeitdiskret abtastenden Durchflusssensor zur messtechnischen Erfassung des von dem Abfüllventil freigegebenen Mediumstroms und mit einer Steuereinheit zur Ansteuerung des Abfüllventils, wobei die Steuereinheit das Abfüllventil zur Durchführung eines Abfüllvorgangs mit einer definierten Soll-Abfüllmenge ansteuert unter Berücksichtigung der Ist-Abfüllmenge, die mithilfe der von dem Durchflusssensor erfassten Durchflussmesswerte ermittelt wird, nämlich dadurch, dass ein Synchronisierungsmittel den Beginn des Abfüllvorgangs synchronisiert auslöst zwischen Abfüllventil und Durchflusssensor, sodass der erste abgetastete Durchflussmesswert des Durchflusssensors in einem definierten zeitlichen Zusammenhang steht zu der initialen Öffnung des Abfüllventils bei dem Abfüllvorgang. Wie schon bei dem zuvor dargestellten Verfahren ist mit der initialen Öffnung des Abfüllventils die den Abfüllvorgang auslösende Öffnung des Abfüllventils gemeint.

Für die Abfüllvorrichtung stellen die zuvor dargestellten Weiterentwicklungen des Verfahrens zum Betrieb einer Abfüllvorrichtung natürlich auch Weiterentwicklungen der Abfüllvorrichtung dar.

Bei einer ersten bevorzugten Ausgestaltung der Abfüllvorrichtung ist vorgesehen, dass das Synchronisierungsmittel realisiert ist durch synchrone lokale Uhren in dem Abfüllventil und dem Durchflusssensor, wobei die Steuereinheit an das Abfüllventil und den Durchflusssensor Befehle zum Auslösen der initialen Öffnung des Abfüllventils und zum Auslösen der Erfassung des ersten abgetasteten Durchflussmesswertes übermittelt. Die Befehle enthalten jeweils Ausführungszeitpunkte zur Ausführung des Befehls. Das Abfüllventil und der Durchflusssensor führen die Befehle aus, wenn die übermittelten Ausführungszeitpunkte mit der jeweiligen Zeit der synchronen lokalen Uhr übereinstimmen. Das Abfüllventil und der Durchflusssensor müssen die Befehle nur hinreichend weit vor den jeweiligen Ausführungszeitpunkten erhalten, sodass die Befehle zum übermittelten Ausführungszeitpunkt auch sicher durchgeführt werden können.

Welcher zeitliche Zusammenhang bzw. welcher zeitliche Versatz zwischen dem Auslösen des Öffnens des Abfüllventils und dem Auslösen der Erfassung des ersten abgetasteten Durchflussmesswertes am besten geeignet ist, um einen möglichst geringen Messfehler zu erzeugen, kann die Abfüllvorrichtung durch eine entsprechende Testfahrt ohne Weiteres automatisch ermitteln. Wenn die Prozessbedingungen gleich bleiben, was sie üblicherweise - in gewissen Grenzen - tun, dann sind die Abfüllvorgänge, wenn nicht nahezu identisch, dann doch sehr ähnlich. Es könnten also systematisch verschiedene zeitliche Verschiebungen zwischen dem Auslösen der initialen Öffnung des Abfüllventils und dem Auslösen der Erfassung des ersten abgetasteten Durchflussmesswertes erprobt werden, wobei diejenige zeitliche Verschiebung am geeignetsten ist, bei der regelmäßig die kleinsten über der Messschwelle liegenden Durchflussmesswerte ermittelt werden.

Bei einer alternativ ausgestalteten bevorzugten Abfüllvorrichtung ist vorgesehen, dass das Synchronisierungsmittel realisiert ist durch ein zeitdeterministisches Bussystem zwischen der Steuereinheit, dem Abfüllventil und dem Durchflusssensor, wobei die Steuereinheit an das Abfüllventil und den Durchflusssensor Befehle zum Auslösen der initialen Öffnung des Abfüllventils und zum Auslösen der Erfassung des ersten abgetasteten Durchflussmesswertes übermittelt und die zeitdeterministisch übermittelten Befehle nach Empfang durch das Abfüllventil und den Durchflusssensor unmittelbar von dem Abfüllventil und dem Durchflusssensor ausgeführt werden. Eine zeitdeterministische Buskommunikation basiert üblicherweise auf den einzelnen Busteilnehmern zugeordneten Zeitscheiben für ihre Kommunikation (senden) und eine zuvor genau festgelegte Planung der Buskommunikation, in der Kausalität, maximale Reaktionszeiten usw. berücksichtigt werden. Beispiele für standardisierte Busse dieser Art sind Echtzeit-Ethernet, ARCNET, FlexRay und TTP.

Eine weitere Ausgestaltung der Abfüllvorrichtung ist dadurch gekennzeichnet, dass das Synchronisierungsmittel realisiert ist durch zumindest eine erste Kommunikationsverbindung zwischen der Steuereinheit und dem Abfüllventil oder der Steuereinheit und dem Durchflusssensor und durch eine zweite Kommunikationsverbindung zwischen dem Abfüllventil und dem Durchflusssensor. Dem Abfüllventil oder dem Durchflusssensor wird von der Steuereinheit über die erste Kommunikationsverbindung ein Befehl zum Auslösen des Abfüllvorgangs übermittelt. Das den Auslösebefehl empfangende Abfüllventil oder der den Auslösebefehl empfangende Durchflusssensor synchronisiert über die zweite Kommunikationsverbindung das initiale Öffnen des Abfüllventils oder die Ermittlung des ersten abgetasteten Durchflussmesswertes. Hier wird eine lokale zweite Kommunikationsverbindung genutzt, die auch als "Triggerleitung" bezeichnet werden könnte. Ein geeigneter Zeitversatz kann auf dem das Triggersignal empfangenden Gerät vorgemerkt sein, sodass die gewünschte zeitliche Abstimmung realisiert wird.

Bei einer weiteren bevorzugten Ausgestaltung der Abfüllvorrichtung ist vorgesehen, dass das Synchronisierungsmittel realisiert ist durch einen Zustandsgrößensensor, der eine Zustandsgröße der Abfüllvorrichtung erfasst, und durch eine Kommunikationsverbindung, über die der Zustandsgrößensensor zumindest mittelbar die erfasste Zustandsgröße an das Abfüllventil und/oder den Durchflusssensor übermittelt, wobei das Abfüllventil und/oder der Durchflusssensor die übermittelte Zustandsgröße auswerten und in Abhängigkeit von der Auswertung die initiale Öffnung des Abfüllventils und/oder die Erfassung des ersten abgetasteten Durchflussmesswerts des Durchflusssensors lokal auslösen. Bei der Zustandsgröße der Abfüllvorrichtung könnte es sich beispielsweise um eine Positionsinformation der in der Abfüllanlage transportierten abzufüllenden Behältnisse handeln. Bei auf einem Förderband transportierten Behältnissen wäre dies also die Förderbandposition, wenn die Behältnisse auf einem Transport-Karussell befördert werden, um zur Abfüllvorrichtung zu gelangen, könnte die Positionsinformationen entsprechend ein Drehwinkel des Transport-Karussells sein.

Eine vorteilhafte Ausgestaltung der Abfüllvorrichtung zeichnet sich dadurch aus, dass die Elemente der Abfüllvorrichtung, also Steuereinheit, Durchflusssensor und Abfüllventil in einem Gehäuse integriert sind und/oder wobei die Steuereinheit, die elektronischen Komponenten des Durchflusssensors, im Wesentlichen also die Signalverarbeitung der von dem Durchflusssensor gelieferten Rohmessdaten und gegebenenfalls eine Kommunikationsschnittstelle, und die elektronischen Komponenten des Abfüllventils, im Wesentlichen also leistungselektronische Komponenten zur Ansteuerung des Abfüllventils und gegebenenfalls auch eine Kommunikationsschnittstelle, auf einer Platine realisiert sind. Durch den damit bewirkten engen Verbund der elektronischen Komponenten ist strukturell sichergestellt, dass eine schnelle Kommunikation zwischen den Komponenten möglich ist, da Bestandteile einer technischen Realisierung, die bei separater Ausführung und entfernter Anordnung der elektronischen Komponenten erforderlich wären, beispielsweise ein Feldbussystem mit den ihm inhärenten Latenzen, entfallen.

Im Einzelnen gibt es nun eine Vielzahl von Möglichkeiten, das erfindungsgemäße Verfahren zum Betreiben einer Abfüllvorrichtung und und die erfindungsgemäße Abfüllvorrichtung auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein Verfahren zum Betreiben einer Abfüllvorrichtung zusammen mit einer solchen Abfüllvorrichtung, wie sie aus dem Stand der Technik bekannt sind,
- Fig. 2: schematisch eine Darstellung der Zusammenhänge zwischen der Ansteuerung bzw. des Öffnungsgrades eines Abfüllventils und der tatsächlichen Abfüllmenge sowie der gemessenen Abfüllmenge bei einem zeitdiskret abtastenden Durchflusssensor,
- Fig. 3: die erfindungsgemäße Vorgehensweise des synchronisierten Betriebs von Abfüllventil und Durchflusssensor zur Verminderung der Fehlerstreuung,
- Fig. 4: die erfindungsgemäße Vorgehensweise des synchronisierten Betriebs von Abfüllventil und Durchflusssensor zur Verminderung der Fehlerstreuung und zur Verminderung eines Abfüllfehlers,
- Fig. 5: das erfindungsgemäße Verfahren zum Betreiben einer Abfüllvorrichtung und eine dementsprechende Abfüllvorrichtung mit zeitlich abgestimmtem Betrieb zwischen Abfüllventil und Durchflusssensor,
- Fig. 6: das erfindungsgemäße Verfahren und die erfindungsgemäße Abfüllvorrichtung unter Verwendung von Echtzeituhren,
- Fig. 7: das erfindungsgemäße Verfahren und die erfindungsgemäße Abfüllvorrichtung unter Verwendung eines zeitdeterministischen Bussystems,
- Fig. 8: das erfindungsgemäße Verfahren und die erfindungsgemäße Abfüllvorrichtung mit einer Kommunikationsverbindung zwischen Abfüllventil und Durchflusssensor und
- Fig. 9: das erfindungsgemäße Verfahren und die erfindungsgemäße Abfüllvorrichtung unter Verwendung einer Zustandsgröße der Abfüllvorrichtung bzw. beteiligter Komponenten der Abfüllvorrichtung.

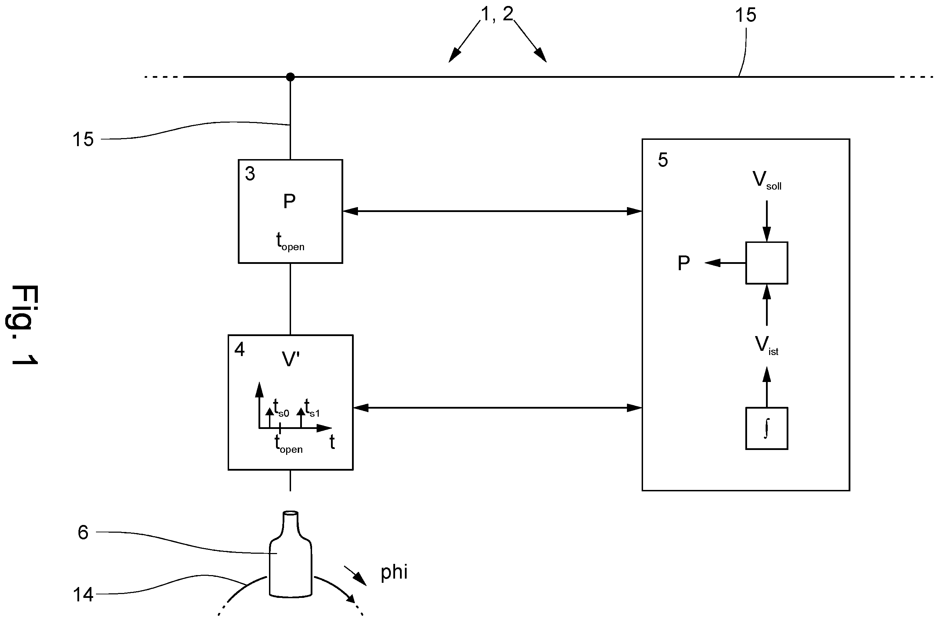

In den Figuren sind ein Verfahren 1 zum Betreiben einer Abfüllvorrichtung 2 und auch die entsprechende Abfüllvorrichtung 2 dargestellt. In jedem Fall umfasst die Abfüllvorrichtung 2 ein Abfüllventil 3 zur Steuerung eines Mediumstroms, einen zeitdiskret abtastenden Durchflusssensor 4 zur messtechnischen Erfassung des von dem Abfüllventil 3 freigegebenen Mediumstroms V' und eine Steuereinheit 5 zur Ansteuerung des Abfüllventils 3. Die Abfüllvorrichtung 2 ist an eine Mediumleitung 15 angeschlossen, über die die Abfüllvorrichtung 2 mit dem abzufüllenden Medium versorgt wird. Die Steuereinheit 5 steuert das Abfüllventil 3 an, um bei der Durchführung des Abfüllvorgangs eine definierte Soll-Abfüllmenge Vsoll auch tatsächlich abzugeben, wie in Fig. 1 dargestellt, in ein Behältnis 6. Dazu wird mithilfe der von dem Durchflusssensor 4 erfassten Durchflussmesswerte V' die gemessene Ist-Abfüllmenge Vist ermittelt. Wenn es sich bei den erfassten Durchflussmesswerten V' beispielsweise um Volumenströme handelt, also Volumendurchsatz pro Zeit, dann werden diese Werte zeitdiskret integriert zu der gemessenen - und berechneten - Ist-Abfüllmenge Vist. Aus der gemessenen Ist-Abfüllmenge Vist und der gewünschten Soll-Abfüllmenge Vsoll wird üblicherweise eine Regeldifferenz gebildet und (unter Anwendung eines geeigneten Reglers) eine Stellgröße für den Öffnungsgrad P des Abfüllventils 3 berechnet und an das Abfüllventil 3 ausgegeben. Diese Herangehensweise, also der Aufbau eines Regelkreises zur Durchführung des Abfüllvorgangs, ist üblicherweise erforderlich, weil der von dem Abfüllventil 3 freigegebene Mediumstrom V' nicht nur von der Öffnungsposition des Abfüllventils 3 abhängt, sondern beispielsweise auch von dem eingangsseitig des Abfüllventils 3 vorherrschenden Mediumdruck, der in einer prozesstechnischen Anlage durchaus schwanken kann.

Die Darstellung in Fig. 1 ist auch insoweit schematisch, als dass zwei separate Kommunikationsverbindungen dargestellt sind, eine zwischen der Steuereinheit 5 und dem Abfüllventil 3, eine weitere zwischen der Steuereinheit 5 und dem Durchflusssensor 4. Darauf kommt es jedoch nicht an, die Verbindungen sind funktional zu verstehen. Wichtig ist, dass ein Informationsaustausch zwischen dem Abfüllventil 3, dem Durchflusssensor 4 und der Steuereinheit 5 in dem erforderlichen Maß gegeben ist. Dieser Informationsaustausch könnte auch realisiert sein mit einem seriellen Bus zwischen den Komponenten, sodass die Steuereinheit 5 nur eine einzige Kommunikationsschnittstelle benötigte.

Wie alle technischen Messsysteme weist auch die hier dargestellte Abfüllvorrichtung 2 einen Messfehler auf, der beispielsweise durch Kalibrierung der Abfüllvorrichtung 2 in gewissen Grenzen minimiert werden kann.

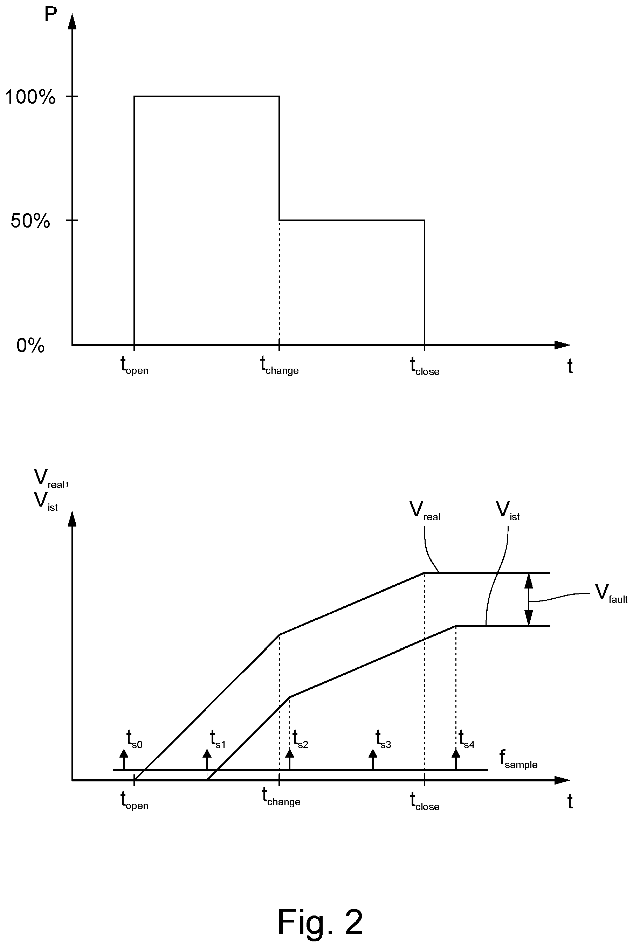

Der Erfindung liegt die Erkenntnis zugrunde, dass mit dem Einsatz des zeitdiskret abtastenden Durchflusssensors 4 ein methodischer Fehler einhergeht, der auch durch Kalibrierung nicht ausgeräumt werden kann. Zur Erläuterung dieses Umstandes ist in Fig. 2, oben, in einem Diagramm der zeitliche Verlauf des Öffnungsgrades P des Abfüllventils 3 schematisch über die Zeit dargestellt. Bis zu einem Zeitpunkt topen ist das Abfüllventil 3 vollständig geschlossen, wird dann vollständig geöffnet und zu einem Zeitpunkt tchange halb geschlossen, um dann schließlich zum Zeitpunkt tclose wieder vollständig geschlossen zu werden, der Abfüllvorgang ist hier beendet.

In Fig. 2, unten, sind die Verläufe von Abfüllmengen dargestellt. Der mit Vreal bezeichnete Kurvenverlauf gibt die tatsächliche, also ohne irgendeinen Messfehler verfälschte Abfüllmenge an, die durch das Abfüllventil 3 abgegeben wird. Der mit Vist bezeichnete Kurvenverlauf stellt die durch den abtastenden Durchflusssensor 4 erfasste und daher gemessene Ist-Abfüllmenge dar. Über der Zeitachse ist ferner die Abtastfunktion fsample dargestellt mit zeitlich äquidistant beabstandeten Abtastzeitpunkten ts0, ts1, ts2 usw. Zu diesen Abtastzeitpunkten ermittelt der zeitdiskret abtastende Durchflusssensor 4 jeweils einen Durchflussmesswert. Zu beachten ist, dass die einzelnen Durchflussmesswerte hier nicht dargestellt sind, sondern nur das Zeitintegral über die Durchflussmesswerte in Form der tatsächlich fehlerfreien Abfüllmenge Vreal und der gemessenen Ist-Abfüllmenge Vist.

Es ist gut zu erkennen, dass der nullte Abtastzeitpunkt ts0 kurz vor dem Zeitpunkt topen der initialen Öffnung des Abfüllventils 3 liegt. Der Volumenstrom setzt aber mit Öffnung des Abfüllventils 3 zum Zeitpunkt topen ein, wird von dem zeitdiskret abtastenden Durchflusssensor 4 aber nicht ermittelt, sondern erstmalig festgestellt zum Abtastzeitpunkt ts1. In der Zeit davor ist der Durchflusssensor 4 "blind" gewesen hinsichtlich des tatsächlich vorhandenen Mediumstroms V'. Der Volumenstrom V' zwischen dem Zeitpunkt topen des sich initial öffnenden Abfüllventils 3 und der Erfassung des ersten abgetasteten Durchflussmesswertes des Durchflusssensors 4 zum Zeitpunkt ts1 fehlt also tatsächlich in der messtechnischen Erfassung des freigegebenen Mediumstroms V'. Nach Abschluss des Abfüllvorgangs zum Zeitpunkt tclose stellt sich schlussendlich also ein Fehler Vfault in der Durchflussmessung ein, der im Zusammenhang steht mit dem zeitdiskret abtastenden Durchflusssensor 4.

Die Darstellung in Fig. 2 ist schematisch und so gewählt, dass der zugrunde liegende Effekt klar erkennbar wird. Es ist einleuchtend, dass der beobachtete, durch die Abtastung verursachte Fehler dann eine besondere Tragweite hat, wenn die Zeitdauer des Abfüllvorgangs selbst im Bereich einiger weniger Abtastschritte ts liegt. Je mehr Abtastschritte ts der Abfüllvorgang andauert, umso unbedeutender ist der eingangs gemachte Fehler bei einem großen Abstand des ersten abgetasteten Durchflussmesswertes des Durchflusssensors 4 zum Zeitpunkt ts1 mit einem Durchflussmesswert ungleich null von dem Zeitpunkt topen der initialen Öffnung des Abfüllventils 3. Bei industriellen Abfüllvorgängen ist der ungünstige Fall nur kurz andauernder Abfüllvorgänge durchaus des Öfteren gegeben, wenn Abfüllvorgänge beispielsweise im Sekundenbereich oder sogar darunter liegen. Ein ebenso bedeutsames Problem ist nicht nur der Umstand, dass mit der zeitdiskreten Messung ein Messfehler einhergeht, sondern auch die Streuung des Messfehlers, die daher rührt, dass im allgemeinen Fall die Abtastfunktion fsample bei jedem Abfüllvorgang unterschiedlich verschoben ist zu den Zeitpunkten fopen, fchange und fclose.

Die Idee zur - weitgehenden - Vermeidung dieser systematischen, durch die zeitdiskrete Arbeitsweise des Durchflusssensors 4 bedingten Fehler (Abfüllfehler an sich sowie Schwankung des Abfüllfehlers) besteht darin, dass der Beginn des Abfüllvorgangs synchronisiert erfolgt zwischen dem Abfüllventil 3 und dem Durchflusssensor 4, sodass der erste abgetastete ts1 Durchflussmesswert des Durchflusssensors 4 in einem definierten zeitlichen Zusammenhang steht zu der initialen Öffnung topen des Abfüllventils 3 bei dem Abfüllvorgang. Die Abtastfunktion fsample steht damit in einem immer gleichen zeitlichen Zusammenhang zu dem Abfüllvorgang und damit zu den Zeitpunkten topen, tchange und tclose.

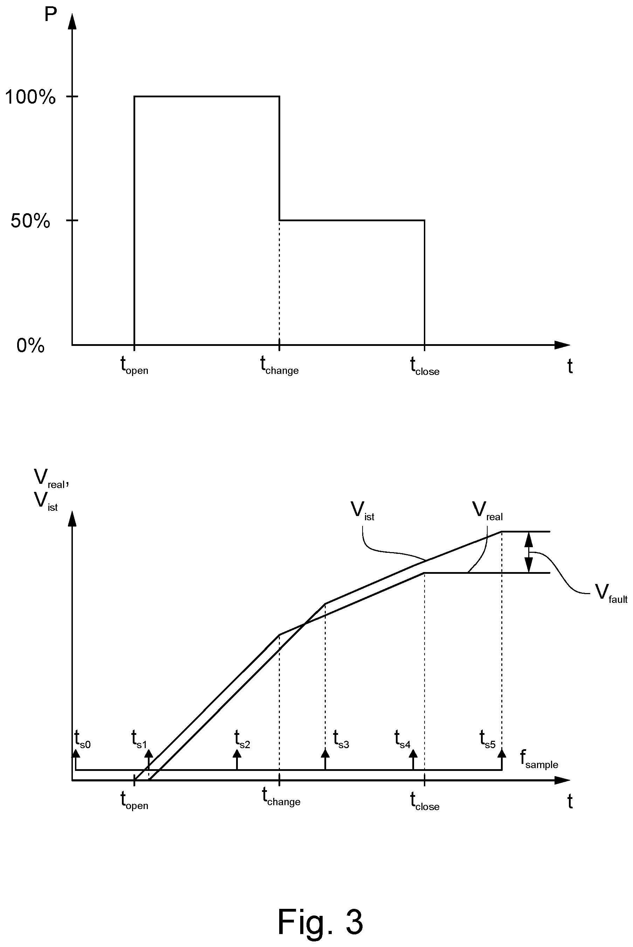

Der zuvor beschriebene Gedanke ist dem Prinzip nach in Fig. 3 dargestellt. In Fig. 3, oben, ist wiederum gezeigt der Öffnungsgrad P des Abfüllventils 3; die Darstellung unterscheidet sich nicht in dem Verlauf von Fig. 2. In Fig. 3, unten, wird nun der Maßgabe Rechnung getragen, dass der Beginn des Abfüllvorgangs synchronisiert erfolgt zwischen dem Abfüllventil 3 und dem Durchflusssensor 4 und zwar so, dass der erste abgetastete Durchflussmesswert des Durchflusssensors 4 zum Zeitpunkt ts1 in einem definierten zeitlichen Zusammenhang steht zu der initialen Öffnung des Abfüllventils 3 zum Zeitpunkt topen bei dem Abfüllvorgang. Dadurch wird die Schwankungsbreite des gemachten Fehlers stark eingeschränkt. Die zeitliche Synchronisation erfolgt hier mit der Maßgabe, dass der erste abgetastete ts1 Durchflussmesswert des Durchflusssensors 4 zeitlich so zu der initialen Öffnung topen des Abfüllventils 3 ausgeführt wird, dass der Durchflussmesswert möglichst nahe an der unteren Messbereichsgrenze des Durchflusssensors 4 erfasst wird. Dies ist in Fig. 3 unten zu erkennen, denn im Vergleich zu der Darstellung in Fig. 2 ist hier der Zeitpunkt ts1 des ersten abgetasteten Durchflussmesswertes des Durchflusssensors 4 an den Zeitpunkt topen der initialen Öffnung des Abfüllventils 3 herangerückt, sodass der Zeitbereich, in dem der Durchflusssensor 4 blind gegenüber einem schon existenten Mediumstrom V' ist, minimiert wird. Es ist zu erkennen, dass der Fehler Vfault in der Durchflussmessung hier erkennbar kleiner ist als in dem Beispiel in Fig. 2.

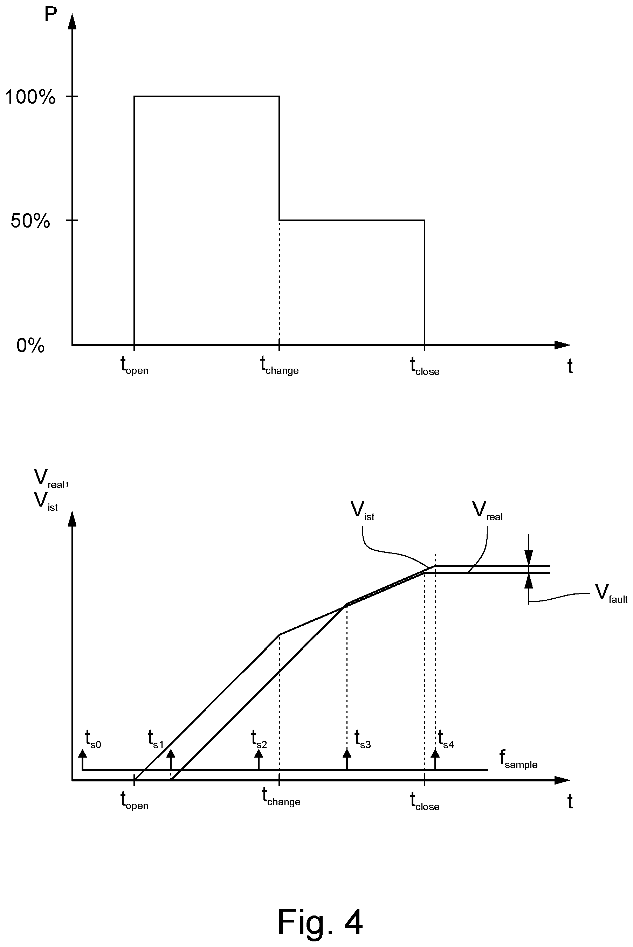

Die zuvor angegebenen Bemessungsregeln, wie die Abtastfunktion fsample zu den Abfüllzeitpunkten vorzugsweise arrangiert werden soll, insbesondere wie der erste abgetastete Durchflussmesswert des Durchflusssensors 4 zum Zeitpunkt ts1 sich zu der initialen Öffnung des Abfüllventils 3 zum Zeitpunkt topen verhalten soll (möglichst nahe bzw. nahe an der unteren Messbereichsgrenze), sorgen in jedem Fall dafür, dass die Schwankungsbreite des Messfehlers weitestgehend beseitigt wird, es wird so jedoch nicht zwingend der absolute Messfehler minimiert. Im Rahmen der Erfindung ist erkannt worden, dass der sich einstellende Messfehler nicht nur am Anfang der Messung entsteht, wenn der erste Abtastzeitpunkt ts1 und das Öffnen des Abfüllventils zum Zeitpunkt topen auseinanderfallen, sondern an jeder Stelle des Abfüllvorgangs, an der sich der Abfüllvorgang ändert, also bei Änderung des Öffnungsgrades P des Abfüllventils, und die Änderung aufgrund der Abtastung erst zeitverzögert wahrgenommen wird. Dieser Sachverhalt wird anhand von Fig. 4 deutlich. Hier liegen der erste Abtastzeitpunkt ts1 und das Öffnen des Abfüllventils 3 zum Zeitpunkt topen weiter auseinander als in Fig. 4, gleichwohl ist der resultierende Messfehler Vfault kleiner als in Fig. 3.

Bei einer bevorzugten Ausgestaltung des Verfahrens ist deshalb vorgesehen, dass der erste abgetastete Durchflussmesswert des Durchflusssensors 4 zum Zeitpunkt ts1 so in einem definierten zeitlichen Zusammenhang steht zu der initialen Öffnung des Abfüllventils 3 zum Zeitpunkt topen bei dem Abfüllvorgang, dass der Abfüllfehler minimiert wird. Der dazu erforderliche zeitliche Versatz zwischen dem Zeitpunkt ts1 des ersten abgetasteten Durchflussmesswertes und dem Zeitpunkt topen des Öffnens des Abfüllventils 3 kann auf unterschiedlichen Wegen ermittelt werden. Eine Möglichkeit besteht in der Durchführung einer Messreihe mit unterschiedlich großen zeitlichen Versätzen und nachfolgender Auswahl der zeitlichen Abstimmung, die den kleinsten Fehler aufweist. Eine andere Möglichkeit besteht in einer rein theoretischen Überlegung, beispielsweise anhand einer grafischen Darstellung wie in den Fig. 2 bis 4, mit der sich eine Zeitverschiebung bestimmen lässt, bei der der Messfehler gering oder sogar minimal ist.

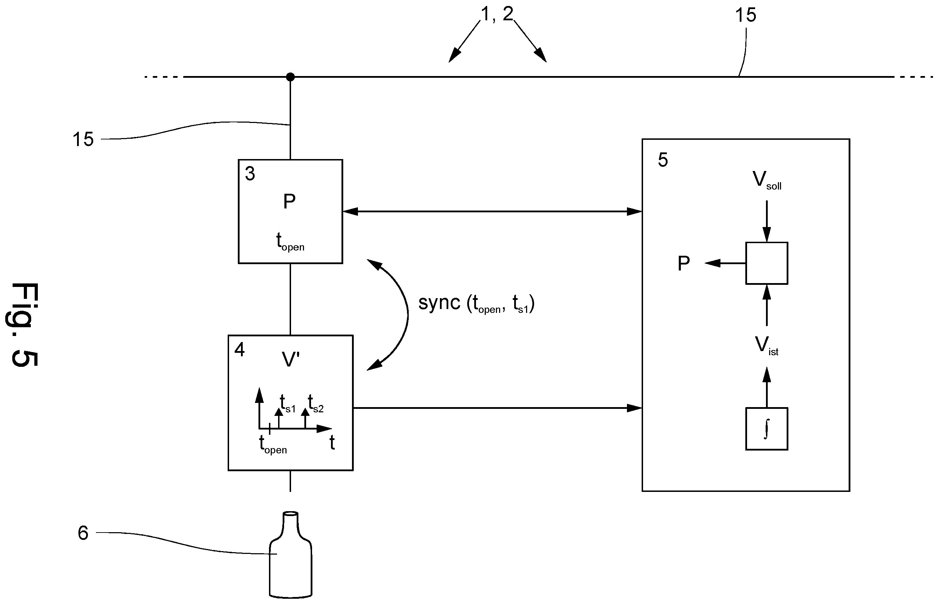

Das beschriebene Prinzip des Betreibens der Abfüllvorrichtung 2 ist in einer gegenständlichen Entsprechung nochmals in Fig. 5 gezeigt. Im Unterschied zu Fig. 1 wird hier der Beginn des Abfüllvorgangs synchronisiert sync(topen, ts1) zwischen dem Abfüllventil 3 und dem Durchflusssensor 4 durchgeführt, also in zeitlicher Abstimmung zueinander. Bei der Synchronisierung sync ist speziell vorgesehen, dass der erste abgetastete Durchflussmesswert des Durchflusssensors 4 zum Zeitpunkt ts1 zeitlich so zu der initialen Öffnung des Abfüllventils 3 zum Zeitpunkt topen ausgeführt wird, dass der Durchflussmesswert möglichst nahe an der unteren Messbereichsgrenze des Durchflusssensors 4 erfasst wird. Dies ist ein technisches Kriterium, das gewährleistet, dass der frühestmögliche, technisch sinnvolle Erfassungszeitpunkt gewählt wird.

Es gibt verschiedene technische Möglichkeiten, um die geforderte Synchronisierung sync zwischen Abfüllventil 3 und Durchflusssensor 4 zu implementieren. Dazu ist allgemein ein Synchronisierungsmittel 7 vorgesehen, das den Beginn des Abfüllvorgangs synchronisiert auslöst zwischen Abfüllventil 3 und Durchflusssensor 4, sodass der erste abgetastete ts1 Durchflussmesswert des Durchflusssensors 4 in einem definierten zeitlichen Zusammenhang steht zu der initialen Öffnung topen des Abfüllventils 3 bei dem Abfüllvorgang.

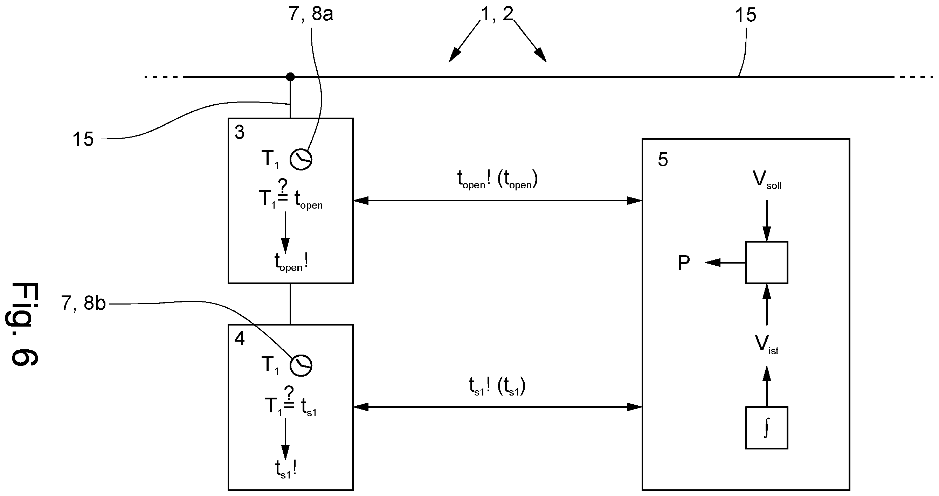

Bei der Abfüllvorrichtung 2 gemäß Fig. 6 ist vorgesehen, dass das Synchronisierungsmittel 7 realisiert ist durch synchrone lokale Uhren 8a, 8b in dem Abfüllventil 3 und dem Durchflusssensor 4. Beide lokale synchrone Uhren zeigen die Zeit T1. Die Steuereinheit 5 sendet an das Abfüllventil 3 und den Durchflusssensor 4 Befehle topen! und ts1! zum Auslösen der initialen Öffnung des Abfüllventils 3 und zum Auslösen der Erfassung des ersten abgetasteten Durchflussmesswertes, wobei die Befehle topen! und ts1! jeweils Ausführungszeitpunkte topen, ts1 zur Ausführung des jeweiligen Befehls topen!, ts1! enthalten. Das Abfüllventil 3 und der Durchflusssensor 4 führen die Befehle aus, wenn die Ausführungszeitpunkte topen, ts1 mit der jeweiligen Zeit T1 der synchronen lokalen Uhr 8a, 8b übereinstimmen.

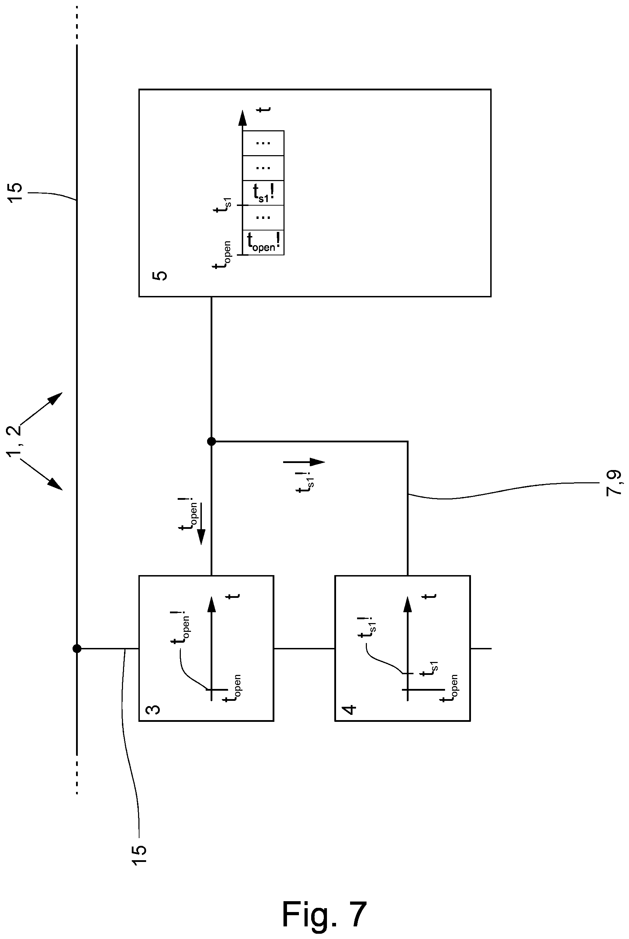

Die Abfüllvorrichtung 2 gemäß Fig. 7 zeigt eine alternative Realisierung des Synchronisierungsmittels 7. Die Lösung besteht in dem Einsatz eines zeitdeterministischen Bussystems 9 zwischen der Steuereinheit 5, dem Abfüllventil 3 und dem Durchflusssensor 4. Die Steuereinheit 5 sendet an das Abfüllventil 3 und den Durchflusssensor 4 Befehle topen!, ts1! zum Auslösen der initialen Öffnung des Abfüllventils 3 und zum Auslösen der Erfassung des ersten abgetasteten Durchflussmesswertes. In der Steuereinheit 5 ist schematisch der zeitdeterministische Kommunikationsplan für die Mitglieder des zeitdeterministischen Bussystems 9 dargestellt. Dadurch, dass jeder Busteilnehmer definierte Zeitscheiben für seine Kommunikation erhält, kann es zu keinen Problemen mit kollidierenden Busnachrichten und der Arbitrierung des zeitdeterministischen Bussystems 9 kommen, weshalb ein deterministisches Kommunikationsverhalten gewährleistet ist. Die zeitdeterministisch übermittelten Befehle topen! und ts! werden nach Empfang durch das Abfüllventil 3 und den Durchflusssensor 4 unmittelbar von dem Abfüllventil 3 und dem Durchflusssensor ausgeführt. So wird auch hier erreicht, dass bei dem Abfüllvorgang der erste abgetastete ts1 Durchflussmesswert des Durchflusssensors 4 und die initiale Öffnung topen des Abfüllventils 3 in einem definierten zeitlichen Zusammenhang stehen.

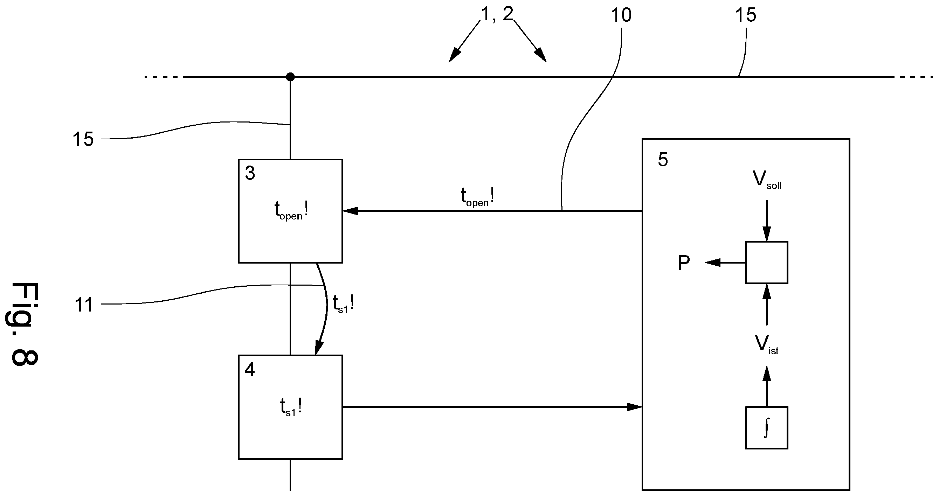

Eine weitere alternative Ausgestaltung des Synchronisierungsmittels 7 zeigt die Abfüllvorrichtung 2 in Fig. 8. Die hier gezeigte Abfüllvorrichtung 2 ist dadurch gekennzeichnet, dass das Synchronisierungsmittels 7 realisiert ist durch eine erste Kommunikationsverbindung 10 zwischen der Steuereinheit 5 und dem Abfüllventil 3 und durch eine zweite Kommunikationsverbindung 11 zwischen dem Abfüllventil 3 und dem Durchflusssensor 4. Dem Abfüllventil 3 wird von der Steuereinheit 5 über die erste Kommunikationsverbindung 10 ein Befehl zum Auslösen topen! des Abfüllvorgangs übermittelt. Das den Auslösebefehl topen! empfangende Abfüllventil 3 synchronisiert über die zweite Kommunikationsverbindung 11 das initiale Öffnen topen! des Abfüllventils 3 und die Ermittlung ts1! des ersten abgetasteten Durchflussmesswertes, indem es dem Durchflusssensor 4 über die zweite Kommunikationsverbindung 11 den Befehl ts1! zum Erfassen des ersten abgetasteten Durchflussmesswertes übermittelt.

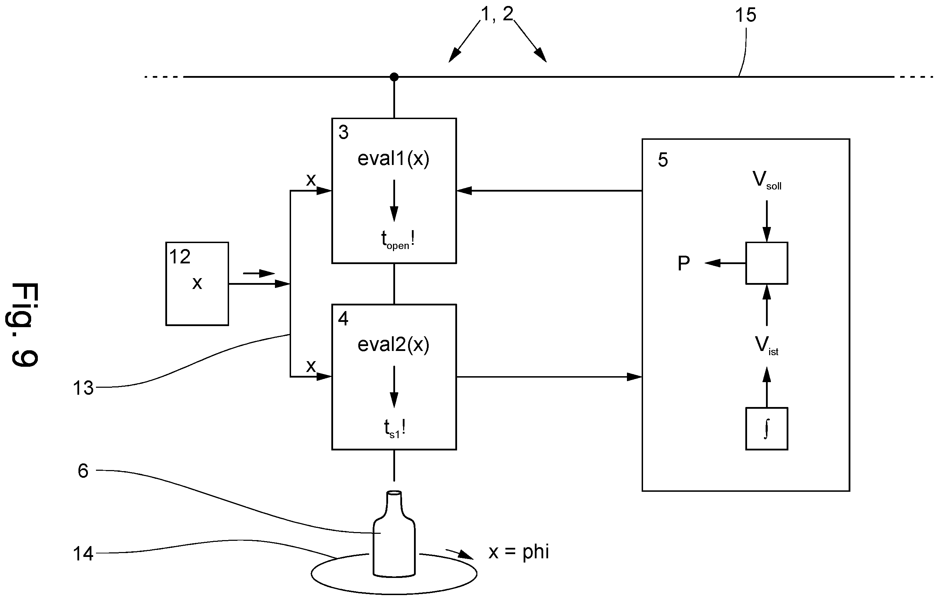

Fig. 9 zeigt eine weitere Ausgestaltung der Abfüllvorrichtung 2. Bei dieser Abfüllvorrichtung 2 ist vorgesehen, dass das Synchronisierungsmittel 7 durch einen Zustandsgrößensensor 12 realisiert ist, der eine Zustandsgröße x der Abfüllvorrichtung 2 erfasst, und durch eine Kommunikationsverbindung 13 an das Abfüllventil 3 und den Durchflusssensor 4 übermittelt. Das Abfüllventil 3 und der Durchflusssensor 4 werten die übermittelte Zustandsgröße x aus evall, eval2, und in Abhängigkeit von der Auswertung evall, eval2 werden die initiale Öffnung topen des Abfüllventils 3 und die Erfassung des ersten abgetasteten ts1 Durchflussmesswerts des Durchflusssensors 4 lokal ausgelöst. In Fig. 8 ist der Zustandsgrößensensor 12 ein Positionssensor, der als Zustandsgröße x der Abfüllvorrichtung 2 die Position des abzufüllenden Behältnisses 6 mittelbar erfasst durch Erfassung des Rotationswinkels phi des Transport-Karussells 14.

Eine hier nicht dargestellte Ausgestaltung der Abfüllvorrichtung 2 sieht vor, dass die Zustandsgröße x an die Steuereinheit 5 übermittelt wird, die Steuereinheit 5 die Zustandsgröße x auswertet evall, eval2 und entsprechende Steuerbefehle topen!, ts1! an das Abfüllventil 3 und den Durchflusssensor 4 übermittelt, wo diese dann ausgeführt werden.

### Bezugszeichen

- 1: Verfahren
- 2: Abfüllvorrichtung
- 3: Abfüllventil
- 4: Durchflusssensor
- 5: Steuereinheit
- 6: Behältnis
- 7: Synchronisierungsmittel
- 8a, 8b: synchrone lokale Uhren
- 9: zeitdeterministisches Bussystem
- 10: erste Kommunikationsverbindung
- 11: zweite Kommunikationsverbindung
- 12: Zustandsgrößensensor
- 13: Kommunikationsverbindung des Zustandsgrößensensors
- 14: Transport-Karussel
- 15: Mediumleitung

- V': freigegebener Mediumstrom
- Vsoll: Soll-Abfüllmenge
- Vist: gemessene Ist-Abfüllmenge
- Vreal: tatsächliche Ist-Abfüllmenge

- topen: Zeitpunkt der initialen Öffnung des Abfüllventils
- tchange: Zeitpunkt der Änderung der Öffnung des Abfüllventils
- tclose: Zeitpunkt der Schließung des Abfüllventils
- fsample: Abtastfunktion
- ts0: Abtastzeitpunkt 0
- ts1: Abtastzeitpunkt 1
- ts2: Abtastzeitpunkt 2
- td: systembedingte Totzeit

- topen!: Befehl zum initialen Öffnen des Abfüllventils
- ts1!: Befehl zur Erfassung des ersten abgtasteten Messwertes
- x: durch Zustandsgrößensensor erfasste Zustandsgröße
- eval(x): Auswerten der Zustandsgröße x

## Patentansprüche

1. Verfahren (1) zum Betreiben einer Abfüllvorrichtung (2) mit einem Abfüllventil (3) zur Steuerung eines Mediumstroms, mit einem zeitdiskret abtastenden Durchflusssensor (4) zur messtechnischen Erfassung des von dem Abfüllventil (3) freigegebenen Mediumstroms (V') und mit einer Steuereinheit (5) zur Ansteuerung des Abfüllventils (3), wobei die Steuereinheit (5) das Abfüllventil (3) zur Durchführung eines Abfüllvorgangs mit einer definierten Soll-Abfüllmenge (Vsoll) ansteuert unter Berücksichtigung der gemessenen Ist-Abfüllmenge (Vist), die mithilfe der von dem Durchflusssensor (4) erfassten Durchflussmesswerte ermittelt wird,
**dadurch gekennzeichnet,**
**dass** der Beginn des Abfüllvorgangs synchronisiert (sync) zwischen Abfüllventil (3) und Durchflusssensor (4) erfolgt, sodass der erste abgetastete (ts1) Durchflussmesswert des Durchflusssensors (4) in einem definierten zeitlichen Zusammenhang steht zu der initialen Öffnung (topen) des Abfüllventils (3) bei dem Abfüllvorgang.

2. Verfahren (1) nach Anspruch 1, **dadurch gekennzeichnet, dass** der erste abgetastete (ts1) Durchflussmesswert des Durchflusssensors (4) zeitlich so zu der initialen Öffnung (topen) des Abfüllventils (3) ausgeführt wird, dass der Durchflussmesswert möglichst zeitnahe zu der initialen Öffnung (topen) des Abfüllventils (3) erfasst wird.

3. Verfahren (1) nach Anspruch 1, **dadurch gekennzeichnet, dass** der erste abgetastete (ts1) Durchflussmesswert des Durchflusssensors (4) zeitlich so zu der initialen Öffnung (topen) des Abfüllventils (3) ausgeführt wird, dass der Durchflussmesswert möglichst nahe an der unteren Messbereichsgrenze des Durchflusssensors (4) erfasst wird.

4. Verfahren (1) nach einem der Ansprüche 1 bis 3, **dadurch gekennzeichnet, dass** der erste abgetastete (ts1) Durchflussmesswert definiert zeitverzögert zu der initialen Öffnung (topen) des Abfüllventils (3) ermittelt wird, insbesondere unter Berücksichtigung einer systembedingten Totzeit (td) zwischen einer Änderung der Ansteuerung des Abfüllventils (3) und einer Änderung des Mediumstroms am Ort der Durchflussmessung durch den Durchflusssensor (4).

5. Verfahren (1) nach einem der Ansprüche 1 bis 4, **dadurch gekennzeichnet, dass** der erste abgetastete Durchflussmesswert des Durchflusssensors (4) zum Zeitpunkt (ts1) so in einem definierten zeitlichen Zusammenhang steht zu der initialen Öffnung des Abfüllventils (3) zum Zeitpunkt topen bei dem Abfüllvorgang, dass der Abfüllfehler (Vfault) minimiert wird.

6. Abfüllvorrichtung (2) mit einem Abfüllventil (3) zur Steuerung eines Mediumstroms, mit einem zeitdiskret abtastenden Durchflusssensor (4) zur messtechnischen Erfassung des von dem Abfüllventil (3) freigegebenen Mediumstroms (V') und mit einer Steuereinheit (5) zur Ansteuerung des Abfüllventils (3), wobei die Steuereinheit (5) das Abfüllventil (3) zur Durchführung eines Abfüllvorgangs mit einer definierten Soll-Abfüllmenge (Vsoll) ansteuert unter Berücksichtigung der gemessenen Ist-Abfüllmenge (Vist), die mithilfe der von dem Durchflusssensor (4) erfassten Durchflussmesswerte ermittelt wird,
**dadurch gekennzeichnet,**
**dass** ein Synchronisierungsmittel (7) den Beginn des Abfüllvorgangs synchronisiert (sync) auslöst zwischen Abfüllventil (3) und Durchflusssensor (4), sodass der erste abgetastete (ts1) Durchflussmesswert des Durchflusssensors (4) in einem definierten zeitlichen Zusammenhang steht zu der initialen Öffnung (topen) des Abfüllventils (3) bei dem Abfüllvorgang.

7. Abfüllvorrichtung (2) nach Anspruch 6, **dadurch gekennzeichnet, dass** das Synchronisierungsmittel (7) so ausgestaltet ist, dass die Abfüllvorrichtung (2) die Verfahrensschritte gemäß den Merkmalen des Kennzeichnungsteils wenigstens eines Anspruchs der Ansprüche 2 bis 4 ausführt.

8. Abfüllvorrichtung (2) nach Anspruch 6 oder 7, **dadurch gekennzeichnet, dass** das Synchronisierungsmittel (7) realisiert ist durch synchrone lokale Uhren (8a, 8b) in dem Abfüllventil (3) und dem Durchflusssensor (4), wobei die Steuereinheit (5) an das Abfüllventil (3) und den Durchflusssensor (4) Befehle (topen!, ts1!) zum Auslösen der initialen Öffnung des Abfüllventils (3) und zum Auslösen der Erfassung des ersten abgetasteten (ts1) Durchflussmesswertes übermittelt, wobei die Befehle (topen!, ts1!) jeweils Ausführungszeitpunkte (topen, ts1) zur Ausführung des Befehls (topen!, ts1!) enthalten, und wobei das Abfüllventil (3) und der Durchflusssensor (4) die Befehle ausführen, wenn die Ausführungszeitpunkte (topen, ts1) mit der jeweiligen Zeit der synchronen lokalen Uhr (8a, 8b) übereinstimmt.

9. Abfüllvorrichtung (2) nach Anspruch 6 oder 7, **dadurch gekennzeichnet, dass** das Synchronisierungsmittel (7) realisiert ist durch ein zeitdeterministisches Bussystem (9) zwischen der Steuereinheit (5), dem Abfüllventil (3) und dem Durchflusssensor (4), wobei die Steuereinheit (5) an das Abfüllventil (3) und den Durchflusssensor (4) Befehle (topen!, ts1!) zum Auslösen der initialen Öffnung des Abfüllventils (3) und zum Auslösen der Erfassung des ersten abgetasteten Durchflussmesswertes übermittelt, und die zeitdeterministisch übermittelten Befehle (topen!, ts1!) nach Empfang durch das Abfüllventil (3) und den Durchflusssensor (4) unmittelbar von dem Abfüllventil (3) und dem Durchflusssensor (4) ausgeführt werden.

10. Abfüllvorrichtung (2) nach Anspruch 6 oder 7, **dadurch gekennzeichnet, dass** das Synchronisierungsmittel (7) realisiert ist durch zumindest eine erste Kommunikationsverbindung (10) zwischen der Steuereinheit (5) und dem Abfüllventil (4) oder der Steuereinheit (5) und dem Durchflusssensor (4) und durch eine zweite Kommunikationsverbindung (11) zwischen dem Abfüllventil (3) und dem Durchflusssensor (4), dass dem Abfüllventil (3) oder dem Durchflusssensor (4) von der Steuereinheit (5) über die erste Kommunikationsverbindung (10) ein Befehl zum Auslösen des Abfüllvorgangs übermittelt wird und dass das den Auslösebefehl (topen!) empfangende Abfüllventil (3) oder der den Auslösebefehl (ts1!) empfangende Durchflusssensor (4) über die zweite Kommunikationsverbindung (11) das initiale Öffnen (topen!) des Abfüllventils und die Ermittlung des ersten abgetasteten (ts1!) Durchflussmesswertes synchronisiert.

11. Abfüllvorrichtung (2) nach Anspruch 6 oder 7, **dadurch gekennzeichnet, dass** das Synchronisierungsmittel (7) realisiert ist durch einen Zustandsgrößensensor (12), der eine Zustandsgröße (x) der Abfüllvorrichtung (2) erfasst, und durch eine Kommunikationsverbindung (13), über die der Zustandsgrößensensor (12) zumindest mittelbar die erfasste Zustandsgröße (x) an das Abfüllventil (3) und/oder den Durchflusssensor (4) übermittelt, wobei das Abfüllventil (3) und/oder der Durchflusssensor (4) die übermittelte Zustandsgröße (x) auswertet (evall, eval2) und in Abhängigkeit von der Auswertung (evall, eval2) die initiale Öffnung (topen) des Abfüllventils (3) und/oder die Erfassung des ersten abgetasteten (ts1) Durchflussmesswerts des Durchflusssensors (4) lokal auslösen.

12. Abfüllvorrichtung (2) nach Anspruch 11, **dadurch gekennzeichnet, dass** der Zustandsgrößensensor (12) ein Positionssensor ist, der als Zustandsgröße (x) der Abfüllvorrichtung (2) die Position des abzufüllenden Behältnisses erfasst oder die Förderposition eines Förderbandes oder den Rotationswinkel (phi) eines Transport-Karussells (14).

13. Abfüllvorrichtung (2) nach einem der Ansprüche 6 bis 12, **dadurch gekennzeichnet, dass** die Elemente der Abfüllvorrichtung (2), also Steuereinheit (5), Durchflusssensor und Abfüllventil (3) in einem Gehäuse integriert sind und/oder dass die Steuereinheit (5), die elektronischen Komponenten des Durchflusssensors (4) und die elektronischen Komponenten des Abfüllventils (3) auf einer Platine realisiert sind.

## Claims

1. Method (1) for operating a filling device (2) having a filling valve (3) for controlling a medium flow, having a discrete-time sampling flow sensor (4) for measurement-based capture of the medium flow (V') discharged by the filling valve (3), and having a controller (5) for actuating the filling valve (3), wherein the control unit (5) controls the filling valve (3) to perform a filling operation with a defined desired filling amount (Vsoll), taking into account the measured actual filling amount (Vist), which is determined with the aid of the flow measurement values captured by the flow sensor (4),
**characterized in**
**that** the start of the filling process is synchronized (sync) between the filling valve (3) and the flow sensor (4), so that the first sampled (ts1) flow measurement value of the flow sensor (4) is in a defined temporal relationship to the initial opening (topen) of the filling valve (3) during the filling process.

2. Method (1) according to claim 1, **characterized in that** the first sampled (ts1) flow measurement value of the flow sensor (4) is performed temporally to the initial opening (topen) of the filling valve (3) in such a way that the flow measurement value is captured as close as possible in time to the initial opening (topen) of the filling valve (3).

3. Method (1) according to claim 1, **characterized in that** the first sampled (ts1) flow measurement value of the flow sensor (4) is performed temporally to the initial opening (topen) of the filling valve (3) in such a way that the flow measurement value is captured as close as possible to the lower measuring range limit of the flow sensor (4).

4. Method (1) according to any one of claims 1 to 3, **characterized in that** the first sampled (ts1) flow measurement value is determined with a defined time delay relative to the initial opening (topen) of the filling valve (3), in particular taking into account a system-related dead time (td) between a change in the actuation of the filling valve (3) and a change in the medium flow at the location of the flow measurement by the flow sensor (4).

5. Method (1) according to any one of claims 1 to 4, **characterized in that** the first sampled flow measurement value of the flow sensor (4) at the time (ts1) is related in time to the initial opening of the filling valve (3) at the time (topen) in the filling process such that the filling error (Vfault) is minimized.

6. Filling device (2) with a filling valve (3) for controlling a medium flow, with a discrete-time sampling flow sensor (4) for measurement-based capture of the medium flow (V') discharged by the filling valve (3), and with a controller (5) for actuating the filling valve (3), wherein the control unit (5) controls the filling valve (3) to perform a filling operation with a defined desired filling amount (Vsoll), taking into account the measured actual filling amount (Vist), which is determined with the aid of the flow measurement values captured by the flow sensor (4),
**characterized in**
**that** a synchronization means (7) triggers the start of the filling process in a synchronized manner (sync) between the filling valve (3) and the flow sensor (4), so that the first sampled (ts1) flow measurement value of the flow sensor (4) is in a defined temporal relationship to the initial opening (topen) of the filling valve (3) during the filling process.

7. Filling device (2) according to claim 6, **characterized in that** the synchronizing means (7) is designed in such a way that the filling device (2) performs the method steps according to the features of the characterizing portion of at least one claim of claims 2 to 4.

8. Filling device (2) according to claim 6 or 7, **characterized in that** the synchronization means (7) is implemented by synchronous local clocks (8a, 8b) in the filling valve (3) and the flow sensor (4), wherein the control unit (5) sends commands (topen!, ts1!) for triggering the initial opening of the filling valve (3) and for triggering the capture of the first sampled (ts1) flow measurement value, wherein the commands (topen!, ts1!) each contain execution times (topen, ts1) for performing the command (topen!, ts1!), and wherein the filling valve (3) and the flow sensor (4) perform the commands when the execution times (topen, ts1) coincide with the respective time of the synchronous local clock (8a, 8b).

9. Filling device (2) according to claim 6 or 7, **characterized in that** the synchronization means (7) is implemented by a time-deterministic bus system (9) between the control unit (5), the filling valve (3) and the flow sensor (4), wherein the control unit (5) transmits commands (topen!, ts1!) to the filling valve (3) and the flow sensor (4) for triggering the initial opening of the filling valve (3) and for triggering the capture of the first sampled flow measurement value, and the commands (topen!, ts1!) transmitted determined by time are performed immediately by the filling valve (3) and the flow sensor (4) after receipt by the filling valve (3) and the flow sensor (4).

10. Filling device (2) according to claim 6 or 7, **characterized in that** the synchronization means (7) is implemented by at least a first communication link (10) between the control unit (5) and the filling valve (4) or the control unit (5) and the flow sensor (4) and by a second communication link (11) between the filling valve (3) and the flow sensor (4), that a command for triggering the filling process is transmitted to the filling valve (3) or the flow sensor (4) by the control unit (5) via the first communication link (10), and that the filling valve (3) receiving the triggering command (topen! ) or the flow sensor (4) receiving the trigger command (ts1!) synchronizes the initial opening (topen!) of the filling valve and the determination of the first sampled (ts1!) flow measurement value via the second communication link (11).

11. Filling device (2) according to claim 6 or 7, **characterized in that** the synchronization means (7) is implemented by a state variable sensor (12), which captures a state variable (x) of the filling device (2), and by a communication link (13), via which the state variable sensor (12) at least indirectly communicates the captured state variable (x) to the filling valve (3) and/or the flow sensor (4), wherein the filling valve (3) and/or the flow sensor (4) evaluates (evall, eval2) the transmitted state variable (x) and, depending on the evaluation (evall, eval2), locally triggers the initial opening (topen) of the filling valve (3) and/or the capture of the first sampled (ts1) flow measurement value of the flow sensor (4).

12. Filling device (2) according to claim 11, **characterized in that** the state variable sensor (12) is a position sensor which captures the position of the container to be filled or the conveying position of a conveyor belt or the angle of rotation (phi) of a transport carousel (14) as state variable (x) of the filling device (2).

13. Filling device (2) according to any one of claims 6 to 12, **characterized in that** the elements of the filling device (2), i.e. control unit (5), flow sensor and filling valve (3) are integrated in a housing and/or that the control unit (5), the electronic components of the flow sensor (4) and the electronic components of the filling valve (3) are implemented on a printed circuit board.

## Revendications

1. Procédé (1) de fonctionnement d'un dispositif de remplissage (2) comprenant une vanne de remplissage (3) pour la commande d'un courant de fluide, un capteur de débit (4) effectuant un échantillonnage discret dans le temps pour la détection métrologique du courant de fluide (V') libéré par la vanne de remplissage (3) et une unité de commande (5) destinée à l'actionnement de la vanne de remplissage (3), l'unité de commande (5) actionnant la vanne de remplissage (3) pour réaliser une opération de remplissage avec une quantité de remplissage cible (Vsoll) définie, en tenant compte de la quantité de remplissage réelle (Vist) mesurée, qui est déterminée à l'aide des valeurs de mesure de débit détectées par le capteur de débit (4),
**caractérisé**
**en ce que** le début de l'opération de remplissage est synchronisé (sync) entre la vanne de remplissage (3) et le capteur de débit (4), de sorte que la première valeur de mesure de débit échantillonnée (ts1) du capteur de débit (4) présente une relation temporelle définie avec l'ouverture initiale (topen) de la vanne de remplissage (3) lors de l'opération de remplissage.

2. Procédé (1) selon la revendication 1, **caractérisé en ce que** la première mesure de débit échantillonnée (ts1) du capteur de débit (4) est effectuée temporellement par rapport à l'ouverture initiale (topen) de la vanne de remplissage (3) de manière à ce que la valeur de mesure de débit soit détectée le plus tôt possible par rapport à l'ouverture initiale (topen) de la vanne de remplissage (3).

3. Procédé (1) selon la revendication 1, **caractérisé en ce que** la première mesure de débit échantillonnée (ts1) du capteur de débit (4) est effectuée temporellement par rapport à l'ouverture initiale (topen) de la vanne de remplissage (3) de manière à ce que la valeur de mesure de débit soit détectée le plus près possible de la limite inférieure de la plage de mesure du capteur de débit (4).

4. Procédé (1) selon l'une des revendications 1 à 3, **caractérisé en ce que** la première mesure de débit échantillonnée (ts1) est déterminée avec un temps de retard défini par rapport à l'ouverture initiale (topen) de la vanne de remplissage (3), en particulier en tenant compte d'un temps mort (td) dû au système entre une variation de l'actionnement de la vanne de remplissage (3) et une variation du courant de fluide à l'emplacement de la mesure de débit par le capteur de débit (4).

5. Procédé (1) selon l'une des revendications 1 à 4, **caractérisé en ce que** la première mesure de débit échantillonnée du capteur de débit (4) à l'instant (ts1) présente une relation temporelle définie avec l'ouverture initiale de la vanne de remplissage (3) à l'instant (topen) lors de l'opération de remplissage, de manière à ce que l'erreur de remplissage (Vfault) soit minimisée.

6. Dispositif de remplissage (2) comprenant une vanne de remplissage (3) pour la commande d'un courant de fluide, un capteur de débit (4) effectuant un échantillonnage discret dans le temps pour la détection métrologique du courant de fluide (V') libéré par la vanne de remplissage (3) et une unité de commande (5) destinée à l'actionnement de la vanne de remplissage (3), l'unité de commande (5) actionnant la vanne de remplissage (3) pour réaliser une opération de remplissage avec une quantité de remplissage cible (Vsoll) définie, en tenant compte de la quantité de remplissage réelle (Vist) mesurée, qui est déterminée à l'aide des valeurs de mesure de débit détectées par le capteur de débit (4),
**caractérisé**
**en ce qu'**un moyen de synchronisation (7) déclenche de manière synchronisée (sync) le début de l'opération de remplissage entre la vanne de remplissage (3) et le capteur de débit (4), de sorte que la première valeur de mesure de débit échantillonnée (ts1) du capteur de débit (4) présente une relation temporelle définie avec l'ouverture initiale (topen) de la vanne de remplissage (3) lors de l'opération de remplissage.

7. Dispositif de remplissage (2) selon la revendication 6, **caractérisé en ce que** le moyen de synchronisation (7) est conçu de telle sorte que le dispositif de remplissage (2) exécute les étapes de procédé conformément aux caractéristiques de la partie caractérisante d'au moins l'une des revendications 2 à 4.

8. Dispositif de remplissage (2) selon la revendication 6 ou 7, **caractérisé en ce que** le moyen de synchronisation (7) est réalisé par des horloges locales synchrones (8a, 8b) dans la vanne de remplissage (3) et le capteur de débit (4), l'unité de commande (5) transmettant à la vanne de remplissage (3) et au capteur de débit (4) des ordres (topen!, ts1!) destinés à déclencher l'ouverture initiale de la vanne de remplissage (3) et à déclencher la détection de la première mesure de débit échantillonnée (ts1), les ordres (topen!, ts1!) contenant respectivement des instants d'exécution (topen, ts1) pour l'exécution de l'ordre (topen!, ts1!), et la vanne de remplissage (3) et le capteur de débit (4) exécutant les ordres lorsque les instants d'exécution (topen, ts1) correspondent à l'heure respective de l'horloge locale synchrone (8a, 8b).

9. Dispositif de remplissage (2) selon la revendication 6 ou 7, **caractérisé en ce que** le moyen de synchronisation (7) est réalisé par un système de bus temporellement déterministe (9) entre l'unité de commande (5), la vanne de remplissage (3) et le capteur de débit (4), l'unité de commande (5) transmettant à la vanne de remplissage (3) et au capteur de débit (4) des ordres (topen!, ts1!) destinés à déclencher l'ouverture initiale de la vanne de remplissage (3) et à déclencher la détection de la première mesure de débit échantillonnée, et les ordres (topen!, ts1!) transmis de manière temporellement déterministe étant exécutés immédiatement par la vanne de remplissage (3) et le capteur de débit (4) après leur réception par la vanne de remplissage (3) et le capteur de débit (4).

10. Dispositif de remplissage (2) selon la revendication 6 ou 7, **caractérisé en ce que** le moyen de synchronisation (7) est réalisé par au moins une première liaison de communication (10) entre l'unité de commande (5) et la vanne de remplissage (4) ou l'unité de commande (5) et le capteur de débit (4), et par une deuxième liaison de communication (11) entre la vanne de remplissage (3) et le capteur de débit (4), de sorte qu'un ordre de déclenchement de l'opération de remplissage est transmis à la vanne de remplissage (3) ou au capteur de débit (4) par l'unité de commande (5) par l'intermédiaire de la première liaison de communication (10), et que la vanne de remplissage (3) recevant l'ordre de déclenchement (topen!) ou le capteur de débit (4) recevant l'ordre de déclenchement (ts1!) synchronise l'ouverture initiale (topen!) de la vanne de remplissage et la détermination de la première mesure de débit échantillonnée (ts1!).

11. Dispositif de remplissage (2) selon la revendication 6 ou 7, **caractérisé en ce que** le moyen de synchronisation (7) est réalisé par un capteur de grandeur d'état (12), qui détecte une grandeur d'état (x) du dispositif de remplissage (2), et par une liaison de communication (13), par l'intermédiaire de laquelle le capteur de grandeur d'état (12) transmet au moins indirectement la grandeur d'état (x) détectée à la vanne de remplissage (3) et/ou au capteur de débit (4), la vanne de remplissage (3) et/ou le capteur de débit (4) évaluant (evall, eval2) la grandeur d'état (x) transmise et déclenchant localement, en fonction de l'évaluation (evall, eval2), l'ouverture initiale (topen) de la vanne de remplissage (3) et/ou la détection de la première mesure de débit échantillonnée (ts1) du capteur de débit (4).

12. Dispositif de remplissage (2) selon la revendication 11, **caractérisé en ce que** le capteur de grandeur d'état (12) est un capteur de position qui détecte, en tant que grandeur d'état (x) du dispositif de remplissage (2), la position du récipient à remplir ou la position d'acheminement d'une bande transporteuse ou l'angle de rotation (phi) d'un carrousel de transport (14).

13. Dispositif de remplissage (2) selon l'une des revendications 6 à 12, **caractérisé en ce que** les éléments du dispositif de remplissage (2), à savoir l'unité de commande (5), le capteur de débit et la vanne de remplissage (3), sont intégrés dans un boîtier et/ou **en ce que** l'unité de commande (5), les composants électroniques du capteur de débit (4) et les composants électroniques de la vanne de remplissage (3) sont réalisés sur une carte de circuit imprimé.
